(19) Europäisches Patentamt
European Patent Office
Office européen des brevets

(11) Veröffentlichungsnummer: **0 432 095 A1**

(12) # EUROPÄISCHE PATENTANMELDUNG

(21) Anmeldenummer: **90810921.8**

(51) Int. Cl.⁵: **C09B 1/467**, D06P 1/24

(22) Anmeldetag: **27.11.90**

(30) Priorität: **04.12.89 CH 4325/89**

(43) Veröffentlichungstag der Anmeldung: **12.06.91 Patentblatt 91/24**

(84) Benannte Vertragsstaaten: **CH DE FR GB IT LI**

(71) Anmelder: **CIBA-GEIGY AG**
**Klybeckstrasse 141**
**CH-4002 Basel(CH)**

(72) Erfinder: **Altermatt, Hans, Dr.**
**Schönenbachstrasse 22**
**CH-4153 Reinach(CH)**

(54) **Anthrachinonküpenfarbstoffe, deren Herstellung und Verwendung.**

(57) Anthrachinonküpenfarbstoffe der allgemeinen Formel

(1) 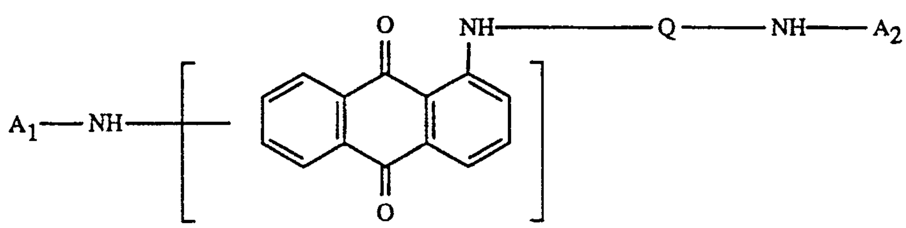

in der

$A_1$ und $A_2$ einen verküpbaren Rest und

Q einen gegebenenfalls substituierten 1,3,5-Triazinrest oder den Rest einer aromatischen, carbocyclischen oder heterocyclischen Dicarbonsäure

bedeuten, eignen sich zum Färben und Bedrucken besonders von Fasern aus natürlicher oder regenerierter Cellulosen. Die nach der Küpenmethode auf Baumwolle applizierten Farbstoffe weisen eine niedere praktisch konstante NIR-Remission im Bereich von 750-1100nm auf.

EP 0 432 095 A1

## ANTHRACHINONKÜPENFARBSTOFFE, DEREN HERSTELLUNG UND VERWENDUNG

Die vorliegende Erfindung betrifft neue Anthrachinonküpenfarbstoffe, Verfahren zu ihrer Herstellung und ihre Verwendung zum Färben oder Bedrucken von Textilfasern.

Die erfindungsgemässen Anthrachinonküpenfarbstoffe entsprechen der allgemeinen Formel

(1) 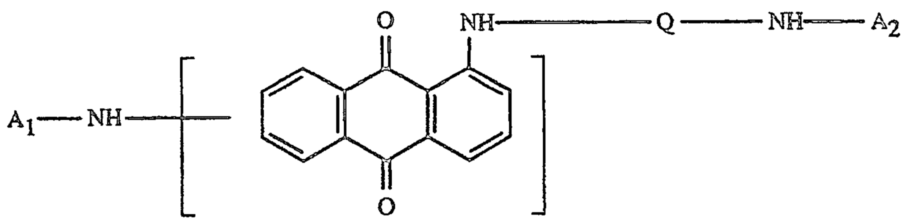

in der

$A_1$ und $A_2$ einen verküpbaren Rest und

Q einen gegebenenfalls substituierten 1,3,5-Triazinrest oder den Rest einer aromatischen, carbocyclischen oder heterocyclischen Dicarbonsäure bedeuten.

Der $A_1$-NH-Rest in Formel (1) befindet sich vorzugsweise in 4- oder 5-Stellung des Anthrachinonylrestes.

Die verküpbaren Reste $A_1$ und $A_2$ leiten sich zweckmässigerweise von polycyclischen chinoiden Verbindungen mit vorzugsweise 3 bis 6 ankondensierten Ringen ab, wie z.B. Anthrachinone, Phthaloylacridone, Anthrone, Benzanthrone, Anthanthrone, Anthrimide, Anthrapyridine, Anthrapyrimidine, Anthrapyridone, Anthrapyrimidone, Azabenzanthrone, Isothiazolanthrone oder Pyrazolanthrone. Dabei sind die Anthrachinon- und Anthrimidreste bevorzugt.

Alle obigen verküpbaren Reste können die üblichen Substituenten enthalten. Solche Substituenten sind beispielsweise Halogen, Trifluormethyl, Niederalkyl, Niederalkoxy,

Niederalkylthio, Niederalkylcarbonyl, Niederalkoxycarbonyl, Amino, Mononiederalkylamino, Diniederalkylamino, Acylamino, Phenyl, Phenylamino, Benzoylamino, Phenyloxy oder Phenylthio.

In erster Linie stellen die Reste $A_1$ einen in 1-Stellung gebundenen Anthrachinonylrest und $A_2$ einen in 1-Stellung gebundenen Anthrimidrest dar, oder $A_1$ und $A_2$ stellen jeweils einen in 1-Stellung gebundenen Anthrachinonylrest dar. Dabei können $A_1$ und $A_2$ Substituenten der oben genannten Art enthalten.

Als Rest einer aromatischen carbocyclischen Dicarbonsäure leitet sich Q vorzugsweise von einer mono- oder dicyclischen aromatischen Dicarbonsäure mit 8 bis 16 Kohlenstoffatomen, besonders einer Benzoldicarbonsäure, wie Isophthalsäure oder Terephthalsäure oder einer Diphenylalkandicarbonsäure, wie Diphenylmethan-3,3'-dicarbonsäure, einer Diphenylsulfid-dicarbonsäure, einer Diphenylsulfon-dicarbonsäure, einer Diphenylketodicarbonsäure, einer Diphenylazo-dicarbonsäure oder auch von Naphthalindicarbonsäuren ab. Die carbocyclischen Reste sind vorzugsweise unsubstituiert oder können durch Hydroxy, Halogen, Cyano, Nitro, Niederalkyl, Niederalkoxy, Niederalkylthio, Phenyl oder Aminogruppen substituiert sein.

Als Rest einer heterocyclischen Dicarbonsäure leitet sich Q vorzugsweise von der Dicarbonsäure eines fünf- oder sechsgliedrigen Heterocyclus aromatischen Charakters ab, wie z.B. Furan, Thiophen, Pyrrol, Pyridin, Pyrazin oder Pyrimidin, wobei diese Heterocyclen unsubstituiert oder durch Halogen, Cyano, Hydroxy, Niederalkyl, Niederalkoxy, Niederalkylthio, Phenyl, Phenoxy oder Phenylthio substituiert sein können.

Vorzugsweise stellt Q einen unsubstituierten oder vorzugsweise substituierten 1,3,5-Triazinrest dar, wobei als Substituenten die obengenannten Gruppen und vor allem Halogen, Niederalkyl, Niederalkoxy, Niederalkylthio, Aryl, wie z.B. Phenyl oder Biphenyl, Aryloxy, wie z.B. Phenoxy, Pyridyl, Amino, Niederalkylamino, Diniederalkylamino, Hydroxy-Niederalkylamino, Di-(hydroxyniederalkyl)amino oder Arylamino, wie z.B. Phenylamino in Betracht kommen.

Niederalkyl, Niederalkylthio und Niederalkoxy stellen in der Regel solche Gruppen oder Gruppenbestandteile dar, die 1 bis 5,insbesondere 1 bis 3 Kohlenstoffatome aufweisen. Beispiele für derartige Gruppen sind Methyl, Ethyl, n-Propyl, Isopropyl, n-Butyl, sek.Butyl, tert.Butyl, Amyl oder Isoamyl bzw. Methoxy, Ethoxy, Isopropoxy, Isobutoxy, tert.Butoxy oder tert.Amyloxy bzw. Methylthio, Ethylthio, Propylthio oder Butylthio.

In Acylamino ist "Acyl" besonders Formyl, Niederalkylcarbonyl, wie z.B. Acetyl oder Propionyl, oder vor allem Benzoyl. Weitere Acylbestandteile können Niederalkylsulfonyl, wie z.B. Methylsulfonyl oder Ethylsulfonyl sowie Phenylsulfonyl sein. Benzoyl und Phenylsulfonyl können durch Halogen, Methyl, Phenyl, Methoxy oder Ethoxy substituiert sein. Als Acylamino kann auch Thiophencarbonylamino (Thenoylamino) in Betracht kommen.

Halogen bedeutet beispielsweise Fluor, Brom oder vorzugsweise Chlor.

Besonders wichtige, erfindungsgemässe Anthrachinonküpenfarbstoffe entsprechen der Formel

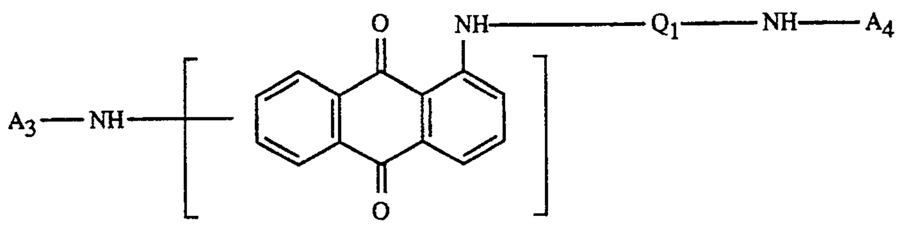

(2)

worin

$A_3$ einen gegebenenfalls substituierten, in 1-Stellung gebundenen Anthrachinonylrest und
$A_4$ einen gegebenenfalls substituierten und in 1-Stellung gebundenen Anthrimidrest oder
$A_3$ und $A_4$ jeweils einen in 1-Stellung gebundenen Anthrachinonylrest
und
$Q_1$ den Rest einer Benzol-, Thiophen- oder Pyridindicarbonsäure oder einen 1,3,5-Triazinrest, der unsubstituiert oder durch Halogen,Niederalkyl, Niederalkoxy, Niederalkylthio, Aryl, Aryloxy, Pyridyl, Amino, Niederalkylamino, Diniederalkylamino, Hydroxyniederalkylamino, Di-(hydroxyniederalkyl)-amino oder Arylamino substituiert ist, bedeuten.

Die Anthrachinonküpenfarbstoffe der Formel (1) werden hergestellt, indem man

(A) eine Verbindung der Formel

(3)

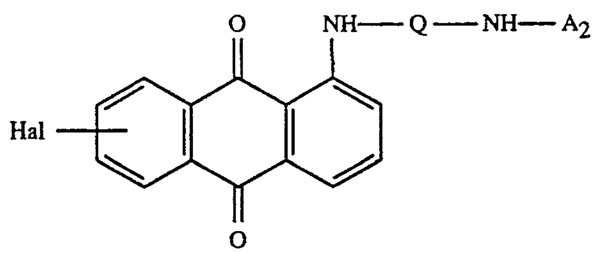

mit einer verküpbaren Aminoverbindung der Formel $A_1$-$NH_2$
oder indem man eine Verbindung der Formel

(4)

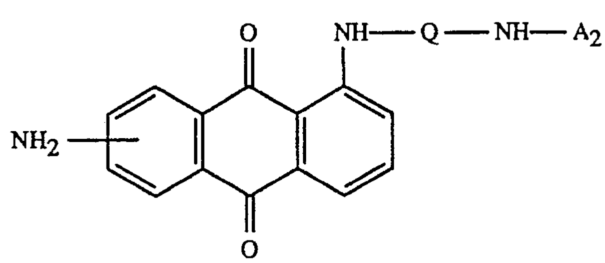

mit einer verküpbaren Halogenverbindung der Formel $A_1$-Hal umsetzt, oder

(B) indem man eine Verbindung der Formel

(5) $Hal\text{-}Q\text{-}NH\text{-}A_2$

mit einer Verbindung der Formel

(6) 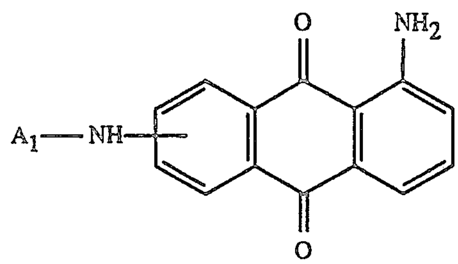 ,

umsetzt oder indem man eine Verbindung der Formel

(7) $NH_2\text{-}Q\text{-}NH\text{-}A_2$

mit einer Verbindung der Formel

(8) 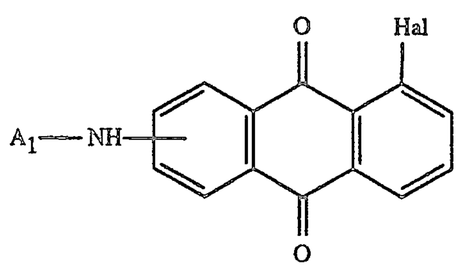

umsetzt, oder

(C) indem man eine Verbindung der Formel

(9) $Q\text{-}(Hal)_2$

mit einer Verbindung der Formel

(10) 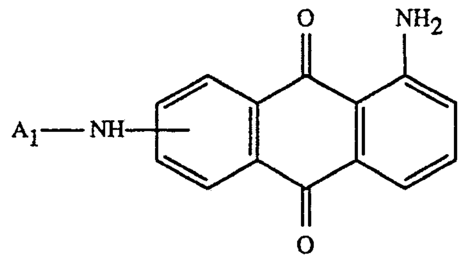

und einer verküpbaren Aminoverbindung der Formel $A_2$-$NH_2$ umsetzt, oder indem man eine Verbindung der Formel

(11) $Q\text{-}(NH_2)_2$

mit einer Verbindung der Formel

(12) 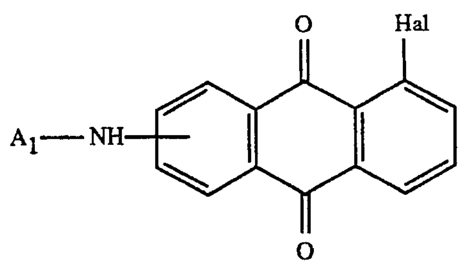

und einer verküpbaren Halogenverbindung der Formel $A_2$-Hal umsetzt.

Bedeutet in der Formel (1) $A_2$ einen Anthrimidrest, werden diese Verbindungen hergestellt, indem man eine Verbindung der Formel

(13) 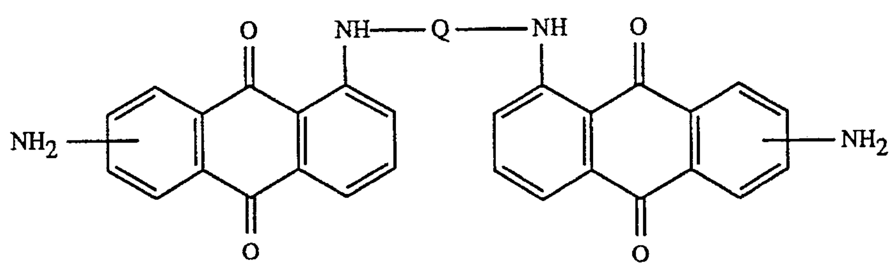

mit einer verküpbaren Halogenverbindung der Formel $A_1$-Hal und einer 1-Halogenanthrachinonverbindung umsetzt, oder indem man eine Verbindung der Formel

(14) 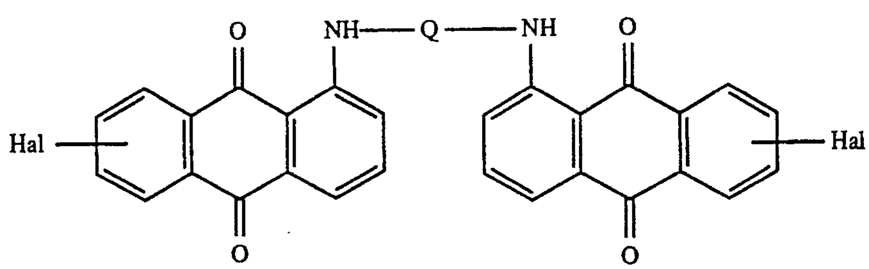

mit einer verküpbaren Aminoverbindung $A_1$-$NH_2$ und einer 1-Aminoanthrachinonverbindung umsetzt.

In den Formeln (3) bis (14) bedeuten

Q einen zweiwertigen aromatischen, carbocyclischen oder heterocyclischen Rest

Hal Halogen, wie Fluor oder vorzugsweise Brom oder Chlor und

$A_1$ und $A_2$ einen verküpbaren Rest.

Die Verbindung der Formel (3) erhält man durch Umsetzung des Monokondensationsproduktes aus der Verbindung der Formel (9) und einer Halogenaminoanthrachinonverbindung mit einer verküpbaren Aminoverbindung der Formel $A_2$-$NH_2$, die Verbindung der Formel (4) durch Umsetzung des Monokondensationsproduktes aus einer Verbindung der Formel (11) und einer Halogenaminoanthrachinonverbindung mit einer verküpbaren Halogenverbindung der Formel $A_2$-Hal. Die Verbindung der Formel (5) erhält man durch Monokondensation aus der Verbindung der Formel (9) und einer verküpbaren Aminoverbindung der Formel $A_2$-$NH_2$, die Verbindung der Formel (7) durch Monokondensation aus einer Verbindung der Formel (11) und einer verküpbaren Halogenverbindung der Formel $A_2$-Hal. Die Verbindung der Formel (13) erhält man durch Kondensation von 1 Mol der Verbindung der Formel (9) und 2 Mol einer Diaminoanthrachinonverbindung, die Verbindung der Formel (14) durch Kondensation von 1 Mol der Vervindung der Formel (9) und 2 Mol einer Halogenaminoanthrachinonverbindung.

Die dabei als Ausgangsstoffe zu verwendenden Amino- und Halogen-1,3,5-triazinverbindungen sind bekannt.

Die wichtigsten als Ausgangsstoffe in Betracht kommenden 1,3,5-Triazinverbindungen sind:

2,4-Diamino-1,3,5-triazin (Formoguanamin),
2,4-Diamino-6-methylthio-1,3,5-triazin,
2,4-Diamino-6-ethylthio-1,3,5-triazin,
2,4-Diamino-6-methyl-1,3,5-triazin (Acetoguanamin),
2,4-Diamino-6-phenyl-1,3,5-triazin (Benzoguanamin),
2,4-Diamino-6-pyridyl-(3')oder-(4')-1,3,5-triazin,
2,4-Dichlor-6-methylthio-1,3,5-triazin,
Cyanurchlorid, Cyanurbromid, Cyanurfluorid,
2,4-Dichlor-6-phenyl-1,3,5-triazin,
2,4-Dichlor-6-phenoxy-1,3,5-triazin,
2,4-Dichlor-6-methylthio-1,3,5 triazin.

Als verküpbare Verbindungen der Formel A-Hal kommen insbesondere solche Verbindungen in Frage, worin die Halogenatome Hal Chlor oder Brom sind. Als geeignete verküpbare Verbindungen A-Hal und A-$NH_2$sind folgende Amine und Halogenverbindungen zu nennen:

1-Aminoanthrachinon,
1-Amino-4-methoxyanthrachinon,
1-Amino-4-acetylaminoanthrachinon,
1-Amino-4-benzoylamino-anthrachinon,
1-Amino-4-(p-toluolsulfonylamino)-anthrachinon,
1-Amino-4-(p-chlorbenzoylamino)-anthrachinon,
1-Amino-4-anilino-anthrachinon,
1-Amino-4-[p-(N,N-dimethylsulfamido)-benzoylamino]-anthrachinon,
1-Amino-4-phenylthio-anthrachinon,
1-Amino-4-(4'-phenyl-benzoylamino)-anthrachinon,
1-Amino-4-chloranthrachinon

sowie die entsprechenden 1-Aminoanthrachinone, die statt in 4-Stellung in 5-oder 8-Stellung substituiert sind.

2-Amino-anthrachinon,
1-Amino-2-methyl-anthrachinon,
1-Amino-3-chlor-anthrachinon,
1-Amino-6,7-dichlor-anthrachinon,
1-Amino-6-phenylthio-anthrachinon,
1-Amino-7-phenylthio-anthrachinon,
1-Amino-6-chlor-7-phenylthio-anthrachinon,
1-Amino-7-chlor-6-phenylthio-anthrachinon,
1,4-Diamino-2-acetyl-anthrachinon,
2-Amino-3-chlor-anthrachinon,
2-Amino-4-chlor-anthrachinon,
1-Amino-2-chlor-anthrachinon,

1-Amino-6-chlor-anthrachinon,
1-Amino-3-chlor-6-methyl-anthrachinon,
1-Amino-2-methyl-3-chlor-anthrachinon,
1-Amino-7-chlor-anthrachinon,
2-Amino-3,4-phthaloylacridon,
2-Amino-6- oder-7-chlor-3,4-phthaloylacridon,
2-Amino-5,7-dichlor-3,4-phthaloylacridon,
2-Amino-1,7-dichlor-3,4-phthaloylacridon,
Aminoisothiazolanthron,
1-Chloranthrachinon,
1,3-Dichloranthrachinon,
1,5-Dichloranthrachinon,
1,6-Dichloranthrachinon,
1,8-Dichloranthrachinon,
1-Bromanthrachinon,
1,5-Dibromanthrachinon,
1,8-Dibromanthrachinon,
1-Chlor-5-acetylaminoanthrachinon,
1-Chlor-4-benzoylaminoanthrachinon,
1-Chlor-4-(thiophen-(2')-carbonylamino)-anthrachinon,
1-Chlor-5-(thiophen-(2')-carbonylamino)-anthrachinon,
1-Chlor-4-(p-chlorbenzoylamino)-anthrachinon,
1-Brom-4-benzoylaminoanthrachinon,
1-Brom-4-(4'-phenylbenzoylamino)-anthrachinon,
1-Chlor-5-benzoylaminoanthrachinon,
1-Chlor-5-(p-chlorbenzoylamino)-anthrachinon,
1-Brom-5-benzoylaminoanthrachinon,
1-Chlor-2-methylaminoanthrachinon,
1-Chlor-4-methylanthrachinon,
1-Chlor-4-methoxyanthrachinon,
1-Brom-2-methoxyanthrachinon,
1-Brom-4-methoxyanthrachinon,
1-Chlor-3-acetyl-4-amino-anthrachinon,
1-Chlor-4-anilino-anthrachinon,
1-Chlor-4-phenylthio-anthrachinon,
1-Chlor-5-phenylthio-anthrachinon,
2-Chlor-3,4-phthaloylacridon
2,5,7-Trichlor-3,4-phthaloylacridon.

Die Umsetzungen der Verbindungen der Formeln (4), (7), (11) und (13) mit den Halogenanthrachinonverbindungen und den verküpbaren Halogenverbindungen der Formel $A_2$-Hal erfolgen zweckmässig in Anwesenheit eines säurebindenden Mittels, wie z.B. eines Alkalimetallhydroxides, Alkalimetallcarbonates oder einer tertiären Stickstoffbase, wie z.B. Pyridin oder Trialkylaminen und in Gegenwart einer Kupferverbindung als Katalysator, wie z.B. Kupferchlorid, Kupfer(I)bromid, Kupfer(I)iodid oder vor allem einer Additionsverbindung dieses Metalljodides und einer tertiären Stickstoffbase, wie z.B. Triethylamin, N-Methylpiperidin oder besonders Pyridin. Bevorzugter Katalysator ist der Cu-Jodid-Pyridinkomplex, wie er in der DE-C-1'795'102 beschrieben ist.

Geht man von den 2,4-Dihalogen-1,3,5-triazinverbindungen oder den Dicarbonsäuredihalogeniden der Formel (9) aus, so kann die Umsetzung mit der Aminoanthrachinonverbindung der Formel (10) und der verküpbaren Aminoverbindung der Formel $A_2$-$NH_2$ in ein- oder zweistufiger Reaktion ausgeführt werden.

Die Reaktionen (A) bis (D) finden vorzugsweise in einem inerten hochsiedenden organischen Lösungsmittel, beispielsweise zwischen 110 bis 230 °C statt.

Als Lösungsmittel eignen sich insbesondere Nitrobenzol oder Chlorbenzole, wie Dichlorbenzol oder Trichlorbenzol oder Naphthalin. Nitrobenzol ist bevorzugt.

Bedeutet Q in den erfindungsgemässen Anthrachinonküpenfarbstoffen einen 1,3,5-Triazinrest,der in 6-Stellung z.B. durch eine Mercaptogruppe oder eine Aminogruppe substituiert ist, so können diese Anthrachinonderivate auch hergestellt werden, indem man eine Halogentriazinverbindung der Formel

(15) 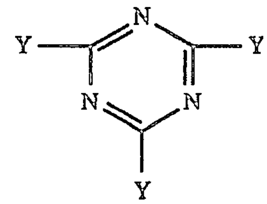

worin alle drei Y Halogenatome sind, mit einer 1-Aminoanthrachinonaminoverbindung, mit einer verküpbaren Aminoverbindung der Formel $A_2$-$NH_2$ und mit einer entsprechenden Mercaptanverbindung oder Aminoverbindung kondensiert. Dabei können die Teilreaktionen in beliebiger Reihenfolge ausgeführt werden. Anstelle des Mercaptans kann auch das entsprechende Alkalimercaptid verwendet werden.

Ueberraschender Weise wurde gefunden, dass diese Farbstoffe - nach der Küpenmethode auf Baumwolle appliziert- eine ungewöhnlich niedere,praktisch konstante NIR-Remission im Bereich von 750-1100 nm aufweisen.

Die erfindungsgemässen Produkte eignen sich zum Färben oder Bedrucken der verschiedensten Materialien, insbesondere zum Färben oder Bedrucken von Fasern aus natürlicher oder regenerierter Cellulose in Gegenwart von Reduktionsmitteln, wie z.B. Dithionit

Die erhaltenen Färbungen zeichnen sich durch hervorragende Egalitäten aus. Die Echtheiten sind allgemein sehr gut, insbesondere die Licht-, Wasser-, Chlor- und Sodakochechtheiten. Die neuen Farbstoffe reservieren Polyesterfasern gut oder schmutzen sie Ton in Ton an, was sie zum Färben von Mischfasern im Gemisch mit Dispersionsfarb-stoffen geeignet macht.

Die neuen Produkte können auch als Pigmente verwendet werden. Dank ihrer günstigen Eigenschaften können sie für die verschiedensten Pigmentapplikationen eingesetzt werden, z.B. in feinverteilter Form zum Färben von Kunstseide, Viscose oder Celluloseethern oder-estem oder von Superpolyamiden bzw. Superpolyurethanen oder Polyestern in der Spinnmasse, sowie zur Herstellung von gefärbten Lacken oder Lackbildnern, Lösungen oder Produkten aus Acetylcellulose, Nitrocellulose, natürlichen Harzen oder Kunstharzen, wie Polymerisationsharzen oder Kondensationsharzen, z.B. Aminoplasten, Alkydharzen, Phenoplasten, Polyolefinen, wie Polystyrol, Polyvinylchlorid, Polyethylen, Polypropylen, Polyacrylnitril, Gummi, Casein, Silikon oder Silikonharzen.

In den folgenden Beispielen bedeuten die Teile ( = T), sofern nichts anderes angegeben ist, Gewichtsteile, die Prozente Gewichtsprozente.

Beispiel 1: 15.8 T des Monokondensationsproduktes aus 2,5-Thiophendicarbonsäuredichlorid und 1-Aminoanthrachinon und 11 T 1-Amino-5-chloranthrachinon werden in 300 Vol.T Nitrobenzol während 6 Stunden bei 165-170 °C verrührt, auf 70 ° C gekühlt und der gelbe Niederschlag abfiltriert, mit wenig Nitrobenzol, dann mit Methanol gründlich gewaschen. Es werden so 22,5 T des gelben Zwischenproduktes der Formel

(101) 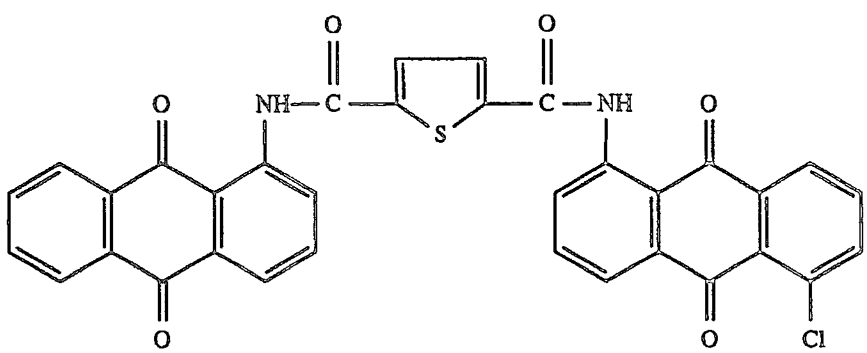

erhalten.

6,2 T des so erhaltenen Zwischenproduktes werden mit 3,85 T 1-Amino-5-benzoylaminoanthrachinon in Gegenwart von 2 T Staubsoda und 0,5 T Kupfer-(I)-chlorid während 18 Stunden in 75 Vol.T Nitrobenzol bei 195-200 °C verrührt. Nach dem Erkalten wird filtriert, der Rückstand mit Nitrobenzol, dann mit Methanol gewaschen. Der Rückstand wird mit Wasser und verdünnter Salpetersäure gewaschen. Es werden so 9,1 T

des braunen Farbstoffes der Formel

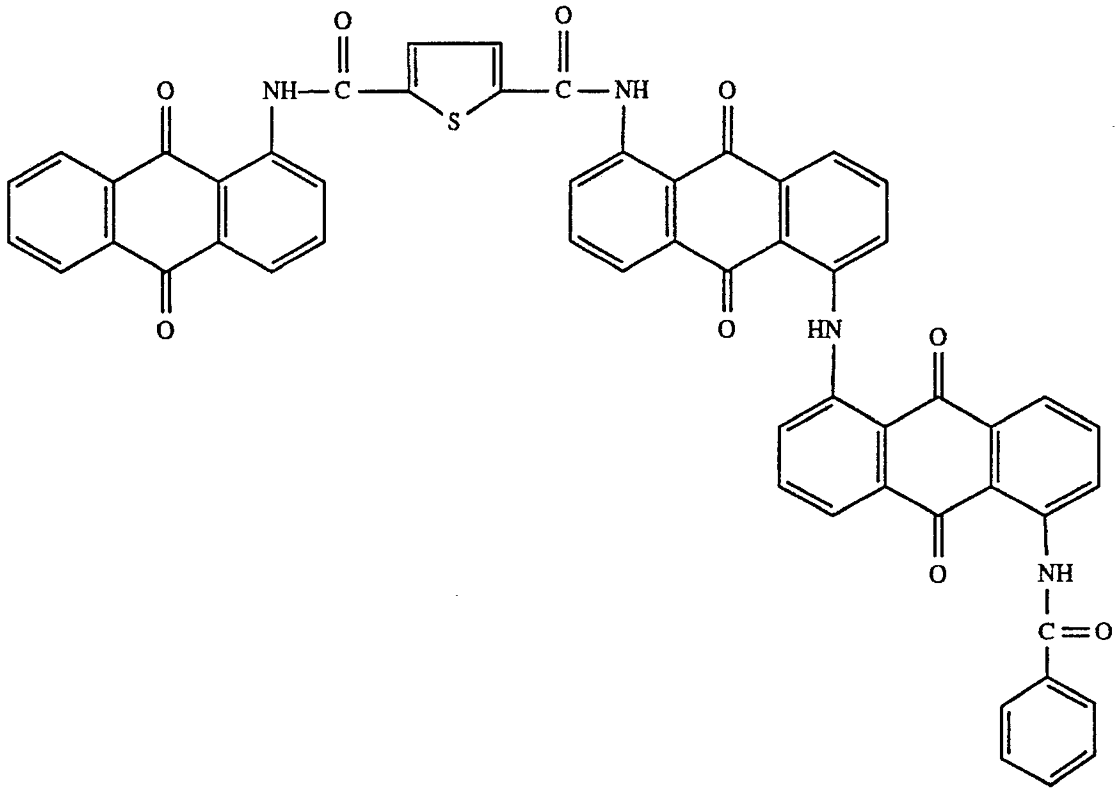

erhalten.

Er färbt Baumwolle nach der Küpenmethode in braunen Tönen mit guten Nass- und Lichtechtheiten.

Beispiel 2:4 T des Monokondensationsproduktes aus 2,5-Thiophendicarbonsäuredichlorid und 1-Aminoanthrachinon werden in 200 Vol.T Nitrobenzol mit 4,6 T 5,5'-Diamino-1,1'-dianthrimid während 3 Stunden bei 140-145° C verrührt. Nun werden 4,2 T Benzoylchlorid zugegeben und abschliessend während 3 Stunden bei 170-175° C verrührt. Nach dem Erkalten wird filtriert und entsprechend Beispiel 1 aufgearbeitet. Man erhält den Farbstoff der Formel (102).

Beispiel 3: 10 T des Monokondensationsproduktes aus 1-Amino-5-benzoylaminoanthrachinon und 2,4-Dichlor-6-methylmercapto-s-triazin der Formel

(103)

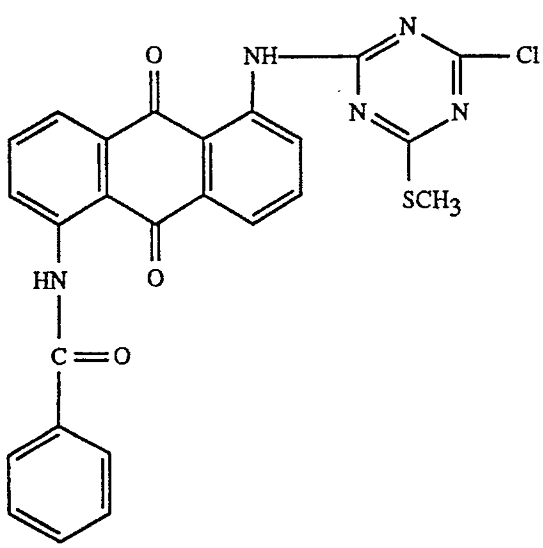

werden mit 5,4 T 1-Amino-5-chloranthronchinon in 125 Vol.T Nitrobenzol während 4 Stunden bei 175-180 ° C und 2 Stunden bei 190-195 ° C zum Zwischenprodukt der Formel

(104)

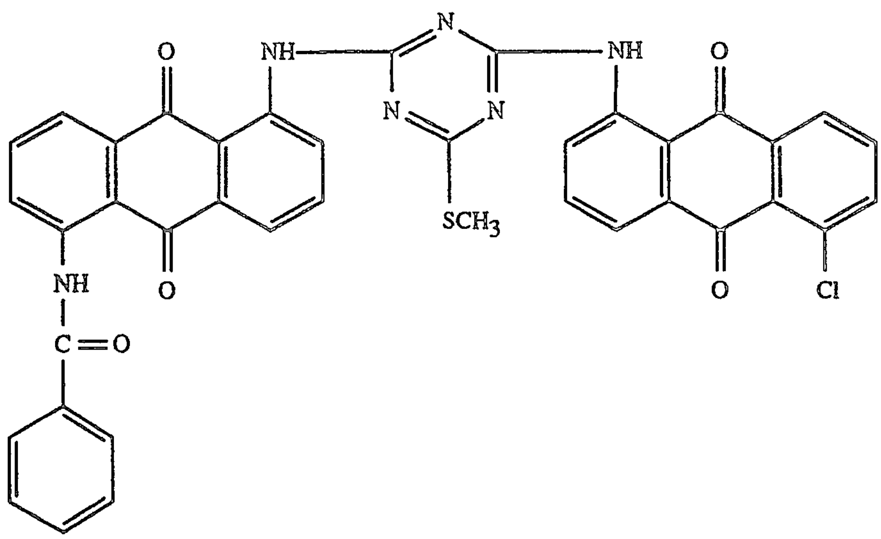

kondensiert.

7,2 T des so dargestellten Zwischenproduktes werden mit 3,9 T 1-Amino-5-benzoyl aminoanthrachinon in Gegenwart von 2 T Natriumcarbonat und 0,5 T Kupfer-(I)-chlorid in 75 Vol.T Nitrobenzol während 18 Stunden bei 195 ° C kondensiert. Nach der üblichen Aufarbeitung werden 9,5 T des braunen Farbstoffes der Formel

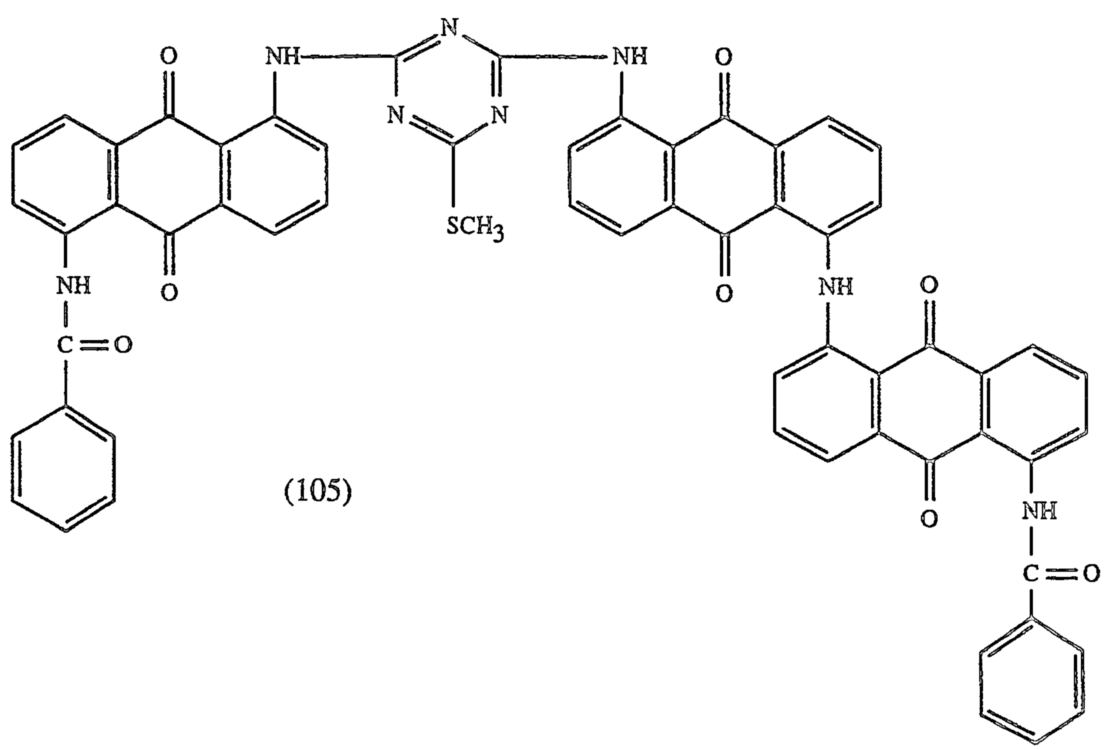

(105)

gewonnen, der Baumwolle in braunen Tönen mit guten allgemeinen Echtheiten färbt.

Beispiel 4: Zu einer Lösung von 9,5 T 1,5-Diaminoanthrachinon in 225 Vol.T Nitrobenzol werden bei 140-145 ° C innert 3 Stunden eine Lösung von 4,2 T Thiophen-2,5-dicarbonsäurechlorid in 40 Vol.T Nitrobenzol zugetropft. Nach Zugabe von 0,2 Vol.T Pyridin wird noch 20 Stunden bei 140-145 ° C nachgerührt. Anschliessend wird gekühlt und filtriert. Mit Nitrobenzol wird zum hellroten Auslauf, dann mit Ethanol nitrobenzolfrei gewaschen. Nach dem Trocknen werden 12 T des braunroten Zwischenproduktes der Formel

(106)

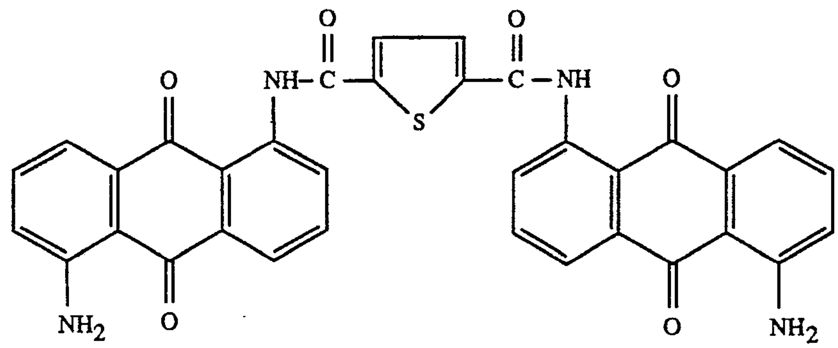

erhalten.

6,1 Teile dieses Zwischenproduktes und 5,1 T 1-Chloranthrachinon werden in Gegenwart von 4T Natriumcarbonat und 0,6 T Kupfer-(I)-chlorid verrührt. Bei 80° C wird der dunkelrote Niederschlag abfiltriert, mit Nitrobenzol bis zum hellen Auslauf, dann mit Ethanol nitrobenzolfrei gewaschen. Mit Wasser wird neutral gewaschen, dann zur Entfernung der Kupfersalze in 3%iger Salpetersäure bei 90° C während ½ Stunde verrührt. Nach dem Abfiltrieren wird neutral gewaschen und getrocknet. Man erhält 9,2 T (= 90% der Theorie) des Farbstoffes der Formel

(107)

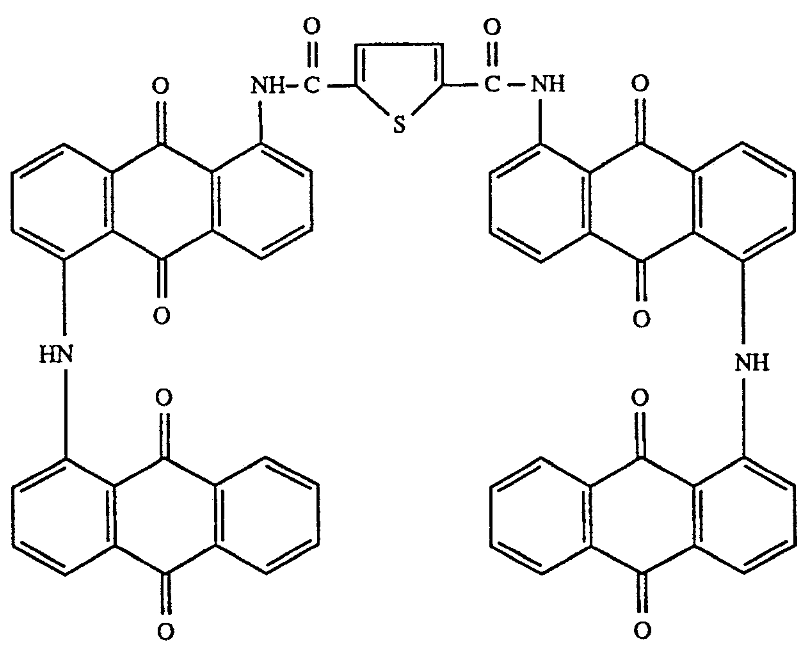

Der Farbstoff färbt Baumwolle nach der Küpenmethode in rotstichig braunen Tönen.

Beispiel 5: 8,9 T 5-Amino-1,1'-dianthrimid und 2,1 T Thiophen-2,5-dicarbonsäurechlorid werden in 100 Vol.T Nitrobenzol während 3 Stunden bei 150° C 5 Stunden bei 175° C und ½ Stunde am Rückfluss verrührt. Bei 90° C wird der Niederschlag abfiltriert, mit Nitrobenzol bis zum hellen Auslauf, dann mit Ethanol nitrobenzolfrei gewaschen. Nach dem Trocknen werden 9,1 T des braunroten Farbstoffes der Formel (107) erhalten.

Beispiel 6:6 T des Farbstoffes der Formel

(108) 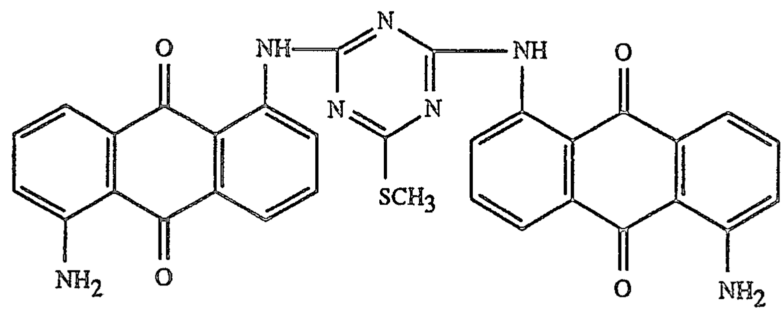

-erhalten durch Verseifen der Dibenzoylaminoverbindung mit Schwefelsäure- werden mit 7,7 T 1-Chlor-4-benzoylamino-anthrachinon in Gegenwart von 3 T Natriumcarbonat und 0,5 T Kupfer(I)-chlorid in 75 Vol.T Nitrobenzol während 18 Stunden unter Rückfluss verrührt. Nach Aufarbeitung wie in Beispiel 4 beschrieben werden 10,1 T des dunkelbraunen Farbstoffes der Formel

(109) 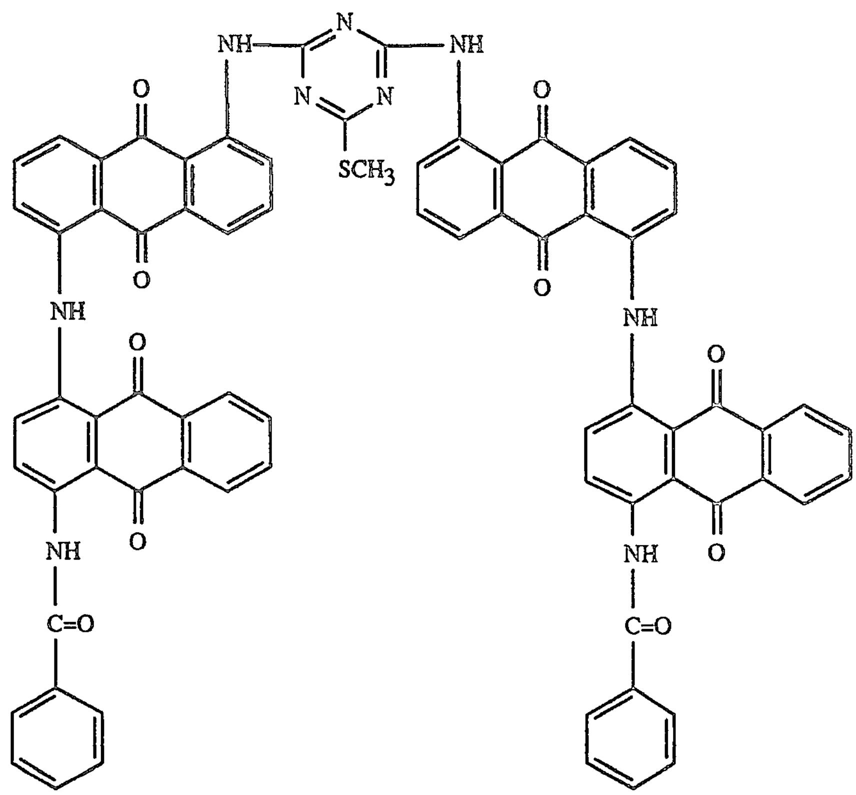

erhalten. Er färbt Baumwolle nach der Küpenmethode in dunkelbraunen Tönen.

Beispiel 7:1,5g des Farbstoffes der Formel (101) werden mit 15 ml einer Natriumhydroxidlösung von 36° Bé und 5 g Natriumdithionit in 200g Wasser bei 50 bis 60° C verküpt. Einem Färbebad, das in 2000g Wasser 5ml der Natriumhydroxidlösung und 3,7g Natriumdithionit enthält, gibt man die obige Stammküpe zu und geht bei 50° C mit 100g Baumwolle ein. Nach 10 Minuten gibt man 15 g Natriumchlorid zu, nach 20 Minuten weitere 15 g und färbt bei 50° C währnd 45 Minuten. Hierauf wird die Baumwolle abgequetscht, oxidiert und wie üblich fertiggestellt. Man erhält eine echte braune Färbung.

**Ansprüche**

1. Anthrachinonküpenfarbstoffe der Formel

(1) 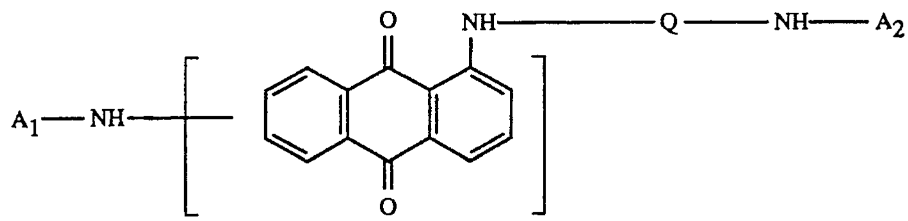

in der

$A_1$ und $A_2$ einen verküpbaren Rest und

Q einen gegebenenfalls substituierten 1,3,5-Triazinrest oder den Rest einer aromatischen, carbocyclischen oder heterocyclischen Dicarbonsäure

bedeuten.

2. Anthrachinonküpenfarbstoffe gemäss Anspruch 1, dadurch gekennzeichnet, dass sich die $A_1$-NH-Gruppe in Formel (1) in 4- oder 5-Stellung des Anthrachinonylrestes befindet.

3. Anthrachinonküpenfarbstoffe gemäss einem der Ansprüche 1 oder 2, dadurch gekennzeichnet, dass sich die Reste $A_1$ und $A_2$ in Formel (1) von einer polycyclischen chinoiden Verbindung ableiten.

4. Anthrachinonküpenfarbstoffe gemäss einem der Ansprüche 1 bis 3, dadurch gekennzeichnet, dass $A_1$ in Formel (1) einen gegebenenfalls substituierten und in 1-Stellung gebundenen Anthrachinonylrest und $A_2$ einen gegebenenfalls substituierten und in 1-Stellung gebundenen Anthrimidrest bedeutet.

5. Anthrachinonküpenfarbstoffe gemäss einem der Ansprüche 1 bis 3,dadurch gekennzeichnet,dass $A_1$ und $A_2$ in Formel (1) einen gegebenenfalls substituierten und in 1-Stellung gebundenen Anthrachinonylrest bedeuten.

6. Anthrachinonküpenfarbstoffe gemäss einem der Ansprüche 1 bis 5, dadurch gekennzeichnet, dass in Formel (1) Q den zweiwertigen Rest einer mono- oder dicyclischen aromatischen Dicarbonsäure mit 8 bis 16 Kohlenstoffatomen darstellt.

7. Anthrachinonküpenfarbstoffe gemäss einem der Ansprüche 1 bis 5, dadurch gekennzeichnet, dass in Formel (1) Q den zweiwertigen Rest einer Dicarbonsäure eines fünf- oder sechsgliedrigen Heterocyclus aromatischen Charakters darstellt.

8. Anthrachinonküpenfarbstoffe gemäss einem der Ansprüche 1 bis 5, dadurch gekennzeichnet, dass in Formel (1) Q einen zweiwertigen unsubstituierten oder durch Halogen, Niederalkyl, Niederalkylthio, Aryl, Aryloxy, Pyridyl, Amino, Niederalkylamino, Diniederalkylamino, Hydroxyniederalkylamino, Di-(hydroxyniederalkyl)amino oder Arylamino substituierten 1,3,5-Triazinrest darstellt.

9. Anthrachinonküpenfarbstoffe gemäss Anspruch 1, dadurch gekennzeichnet dass sie der Formel

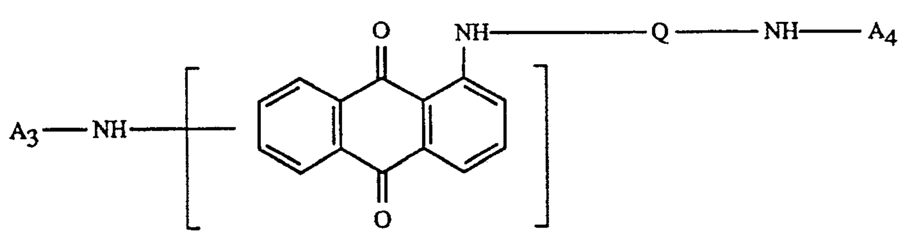 (2)

entsprechen, worin

$A_3$ einen gegebenenfalls substituierten und in 1-Stellung gebundenen Anthrachinonylrest und $A_4$

einen gegebenenfalls substituierten und in 1-Stellung gebundenen Anthrachinonylrest oder einen gegebenenfalls substituierten und in 1-Stellung gebundenen Anthrimidrest bedeutet. und

Q den Rest einer Benzol-, Thiophen- oder Pyridindicarbonsäure oder einen 1,3,5-Triazinrest,der unsubstituiert oder durch Halogen, Niederalkyl, Niederalkoxy, Niederalkylthio, Aryl, Aryloxy,Pyridyl, Amino, Niederalkylamino, Diniederalkylamino, Hydioxyniederalkylamino, Di-(hydioxyniederalkyl)-amino oder Arylamino substituiert ist,

bedeuten.

**10.** Anthrachinonküpenfarbstoffe gemäss Anspruch 9, dadurch gekennzeichnet, dass $A_3$ und $A_4$ einen gegebenenfalls substituierten und in 1-Stellung gebundenen Anthrachinonylrest bedeuten und Q die in Anspruch 8 angegebene Bedeutung hat.

**11.** Anthrachinonküpenfarbstoffe gemäss Anspruch 9,dadurch gekennzeichnet, dass $A_3$ einen gegebenenfalls substituierten und in 1-Stellung gebundenen Anthrachinonylrest und $A_4$ einen gegebenenfalls substituierten und in 1-Stellung gebundenen Anthrimidrest bedeuten und Q die in Anspruch 8 angegebene Bedeutung hat.

**12.** Verfahren zur Herstellung von Anthrachinonküpenfarbstoffen der Formel (1), dadurch gekennzeichnet, dass man eine Verbindung der Formel

(3)

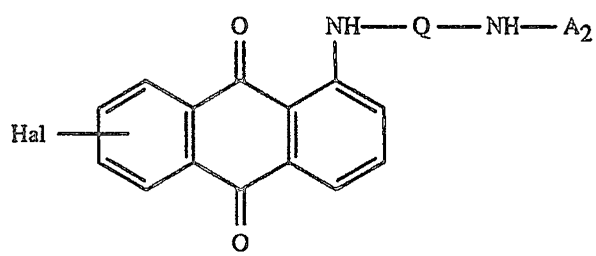

mit einer verküpbaren Aminoverbindung $A_1$-$NH_2$umsetzt oder dass man eine Verbindung der Formel

(4)

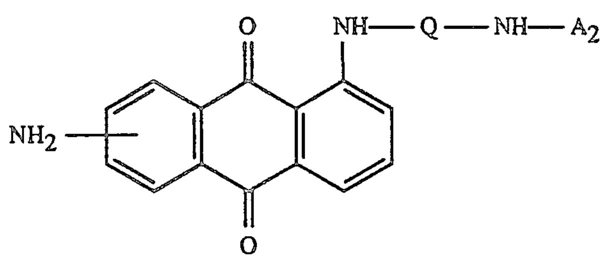

mit einer verküpbaren Halogenverbindung $A_1$-Hal umsetzt, wobei $A_1$ und $A_2$ und Q die in Anspruch 1 angegebene Bedeutung haben.

**13.** Verfahren zur Herstellung von Anthrachinonküpenfarbstoffen der Formel (1), dadurch gekennzeichnet, dass man eine Verbindung der Formel

(5) Hal-Q-NH-$A_2$

mit einer Aminoverbindung der Formel

(6) 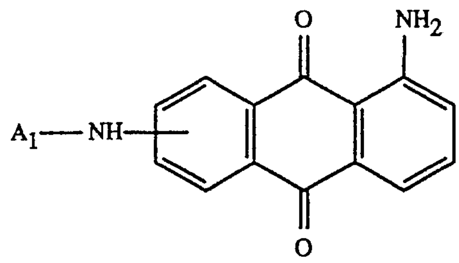

umsetzt oder dass man eine Verbindung der Formel

(7) $NH_2\text{-}Q\text{-}NH\text{-}A_2$

mit einer Verbindung der Formel

(8) 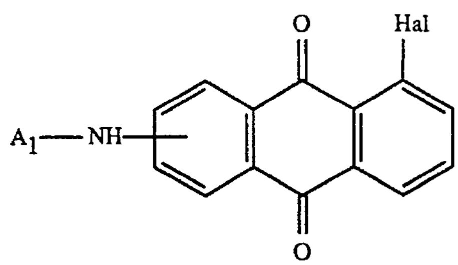

umsetzt, wobei $A_1$ und $A_2$ und Q die in Anspruch 1 angegebene Bedeutung haben.

**14.** Verfahren zur Herstellung von Anthrachinonküpenfarbstoffen der Formel (1) gemäss Anspruch 1, dadurch gekennzeichnet, dass man eine Verbindung der Formel

(9) $Q\text{-}(Hal)_2$

mit einer Verbindung der Formel

(10) 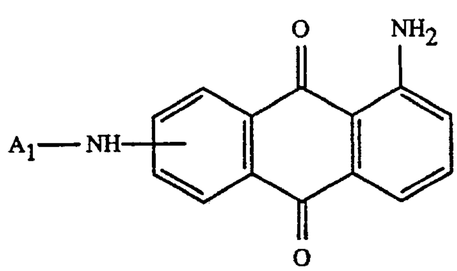

und einer verküpbaren Aminoverbindung der Formel $A_2\text{-}NH_2$ umsetzt oder dass man eine Verbindung der Formel

(11) $Q\text{-}(NH_2)_2$

mit einer Verbindung der Formel

(12) 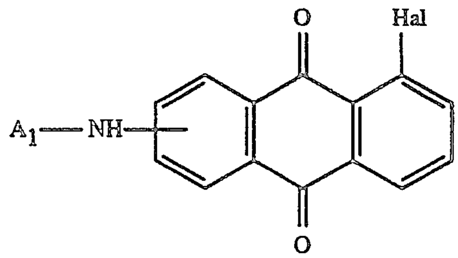

und einer verküpbaren Halogenverbindung der Formel $A_2$-Hal umsetzt, wobei $A_1$ und $A_2$ und Q die in Anspruch 1 angegebene Bedeutung haben.

**15.** Verfahren zur Herstellung von Anthrachinonküpenfarbstoffen der Formel (1), in der $A_2$ einen Anthrimidrest darstellt gemäss Anspruch 1, dadurch gekennzeichnet, dass man eine Verbindung der Formel

(13) 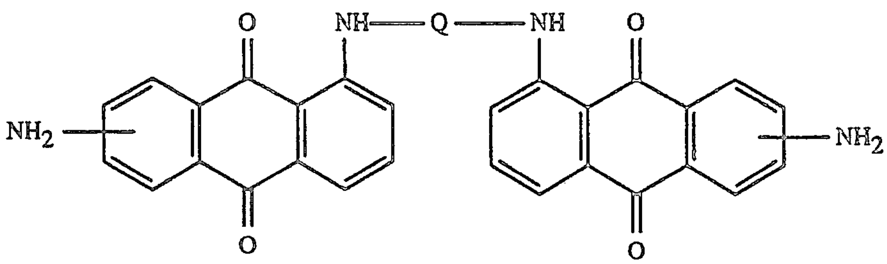

mit einer verküpbaren Halogenverbindung der Formel $A_1$-Hal und einer 1-Halogenanthrachinonverbindung umsetzt oder dass man eine Verbindung der Formel

(14) 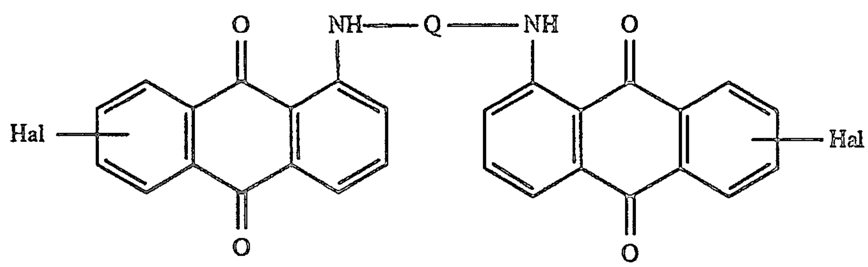

mit einer verküpbaren Aminoverbindung $A_1$-$NH_2$ und einer 1-Aminoanthrachinonverbin dung umsetzt, wobei $A_1$ und $A_2$ und Q die in Anspruch 1 angegebene Bedeutung haben.

**16.** Verwendung der Anthrachinonküpenfarbstoffe gemäss Anspruch 1 zum Färben oder Bedrucken von Textilfasern aus natürlicher oder regenerierter Cellulose.

Europäisches Patentamt

# EUROPÄISCHER RECHERCHENBERICHT

Nummer der Anmeldung

**EP 90 81 0921**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-1 064 174 (BASF)<br>* Patentanspruch; Beispiele *<br>- - - | 1 | C 09<br>B 1/467<br>D 06 P 1/24 |
| A | EP-A-0 025 166 (CIBA-GEIGY)<br>* Anspruch 1 *<br>- - - | 1 | |
| A | BE-A-7 104 60 (BASF)<br>* Anspruch 1 *<br>- - - - - | 1 | |
| | | | RECHERCHIERTE SACHGEBIETE (Int. Cl.5) |
| | | | C 09 B |

Der vorliegende Recherchenbericht wurde für alle Patentansprüche erstellt

| Recherchenort | Abschlußdatum der Recherche | Prüfer |
|---|---|---|
| Den Haag | 14 Dezember 90 | GINESTET M.E.J. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument